# EUROPÄISCHE PATENTANMELDUNG

(11) **EP 2 044 833 A2**
(43) Veröffentlichungstag der Anmeldung: **08.04.2009**
(21) Anmeldenummer: 08450136.0
(22) Anmeldetag: 15.09.2008
(51) Int. Cl.: A01G 3/00, A01G 23/093

(54) **Fördereinrichtung zum Abtransport erzeugten Hackgutes aus einer Hackmaschine**

(30) Priorität: 04.10.2007 AT 15752007
(71) Anmelder: Mus-Max GmbH, 8522 Gross St. Florian (AT)
(72) Erfinder: Urch, Erich, 8522 Gross St. Florian (AT)
(74) Vertreter: Patentanwaltskanzlei Matschnig & Forsthuber OG

(57) **Zusammenfassung**

Eine Fördereinrichtung (FOE) zum Abtransport erzeugten Hackgutes aus einer Hackmaschine (HAM), wobei zum Abtransport des Hackgutes ein Vertikalschneckenförderer (VER) vorgesehen ist, welcher eine von einem Antrieb (ANT) antreibbare Förderschnecke (FOS) aufweist, wobei die Förderschnecke (FOS) von einem in einem Auswurfbereich (AUS) für das Hackgut eine seitliche Öffnung (OEF) aufweisenden Rohr (ROH) umgeben ist, wobei der Vertikalschneckenförderer (VER) auf Höhe der seitlichen Öffnung (OEF) zumindest ein Auswurfmittel (AWM) für das Hackgut aufweist, und zumindest ein an dem Vertikalschneckenförderer (VER) in einem vorgebbaren Winkelbereich verschwenkbar gelagertes Fördermittel (FOM) zu einem Weitertransport von aus der Öffnung (OEF) ausgeworfenem Hackgut vorgesehen ist.

## Beschreibung

Die Erfindung betrifft eine Fördereinrichtung zum Abtransport erzeugten Hackgutes aus einer Hackmaschine.

Die DE8337174U1 und die DE8327326U1 zeigen Ladevorrichtungen zum Erfassen und definierten Aufheben von Haufwerk, wie beispielsweise Kies, Sand oder Koks, welches frei zugänglich abgelegt ist, um mit der Ladevorrichtung direkt an das Haufwerk heranfahren zu können. Die bekannten Ladevorrichtungen weisen einen vertikalen Schneckenförderer und einen mit diesem zusammenwirkenden horizontalen Schneckenförderer auf. Der horizontale Schneckenförderer ist hierbei an einem unteren Ende des vertikalen Schneckenförderers angeordnet und dient zur Beschickung des vertikalen Schneckenförderers. Zur Förderung wird mit dem Ladegerät an das Haufwerk herangefahren und der horizontale Schneckenförderer gegen das Haufwerk geschoben. Nachteilig an diesen Ladegeräten ist, dass sie bauartbedingt nicht für den Abtransport von Hackgut aus einer Hackmaschine geeignet sind.

Aus der DE 41 26 910 C1 ist eine Fördereinrichtung bekannt geworden, bei welcher von einer Hackvorrichtung zerkleinerte Holzstücke durch ein Lochgitter auf eine Förderschnecke fallen, die dann das erzeugte Hackgut in horizontaler Richtung abtransportiert.

Bei einer anderen aus der EP 77 30 68 A2 bekannten Ausführungsform ist anstelle einer Förderschnecke ein Gebläse zum Abtransport des erzeugten Hackgutes vorgesehen.

Nachteilig an den bekannten Ausführungsformen ist vor allem, dass die Höhe, auf welcher das Hackgut ausgeschüttet werden kann, bauartbedingt sehr eingeschränkt und nicht gut variierbar ist, wodurch beispielsweise die Befüllung von Behälter mit dem Hackgut erschwert wird. Vor allem bei Fördereinrichtungen mit Gebläsen ergibt sich überdies das Problem einer hohen Staubentwicklung und eines hohen Verschleißes.

Es ist daher eine Aufgabe der Erfindung, die oben genannten Nachteile des Stands der Technik zu überwinden.

Diese Aufgabe wird mit einer Fördereinrichtung der eingangs genannten Art erfindungsgemäß dadurch gelöst, dass zum Abtransport des Hackgutes ein Vertikalschneckenförderer vorgesehen ist, welcher eine von einem Antrieb antreibbare Förderschnecke aufweist, wobei die Förderschnecke von einem in einem Auswurfbereich für das Hackgut eine seitliche Öffnung aufweisenden Rohr umgeben ist, wobei der Vertikalschneckenförderer auf Höhe der seitlichen Öffnung zumindest ein Auswurfmittel für das Hackgut aufweist, und zumindest ein an dem Vertikalschneckenförderer in einem vorgebbaren Winkelbereich verschwenkbar gelagertes Fördermittel zu einem Weitertransport von aus der Öffnung ausgeworfenem Hackgut vorgesehen ist.

Die erfindungsgemäße Lösung erlaubt eine sehr einfache und an unterschiedliche Verhältnisse anpassbare Ausbringung des erzeugten Hackgutes, wobei im Gegensatz zur Verwendung eines Gebläses, mit der üblicherweise eine ungewollte Nachzerkleinerung verbunden ist, auch eine sehr gute Qualität des Hackgutes erzielt werden kann.

Um einen Transport der Hackschnitzel in dem Vertikalschneckenförderer von unten nach oben zu unterstützen und ein Herunterfallen des Hackgutes in dem Rohr zu verhindern, kann in einer vorteilhaften Variante der Erfindung an der Innenseite des Rohres zumindest eine parallel zur Rohrlängsachse verlaufende, sich im wesentlichen über die gesamte Förderhöhe des Vertikalschneckenförderers erstreckende, in das Rohrinnere ragende Leiste angebracht sein.

Eine große Flexibilität in der Positionierung der Fördereinrichtung lässt sich dadurch erzielen, dass das zumindest eine an dem Vertikalschneckenförderer verschwenkbar gelagerte Fördermittel in seinem Verschwenkbereich frei feststellbar ist.

In einer bevorzugten Variante der Erfindung kann das zumindest eine an dem Vertikalschneckenförderer verschwenkbar gelagerte Fördermittel als Trogförderer mit einer Trogförderschnecke oder auch als Förderband ausgebildet sein.

Der Einsatzbereich der erfindungsgemäßen Fördereinrichtung lässt sich dadurch erweitern, dass unter dem Fördermittel, welches an dem Vertikalschneckenförderer verschwenkbar gelagert ist, ein weiteres Fördermittels längsverschiebbar gelagert ist.

Gemäß einer bevorzugten Variante der Erfindung kann das weitere Fördermittel als Förderband ausgebildet sein.

Um das Hackgut gezielt an einer Stelle abrieseln lassen zu können, kann an einem Endbereich des weiteren Fördermittels ein um eine im wesentlichen normal zu einer Längsachse des Vertikalschneckenförderers schwenkbarer Auslasstrichter für das Hackgut vorgesehen sein.

Eine besonders vorteilhafte, einfach zu realisierende Lösung sieht vor, dass das zumindest eine Auswurfmittel plattenförmig ausgebildet ist, wobei die Längskante des Auswurfmittels im Wesentlichen parallel zur Längsachse des Vertikalschneckenförderers angeordnet ist.

Die eingangs genannte Aufgabe lässt sich auch mit einer Hackmaschine lösen, welche eine erfindungsgemäße Fördereinrichtung aufweist.

Der Einsatzbereich bei der Ausbringung des Hackgutes lässt sich dadurch erweitern, dass der Vertikalschneckenförderer um seine Längsachse drehbar an der Hackmaschine angeordnet ist.

Die Erfindung samt weiteren Vorteilen wird im Folgenden anhand einiger nicht einschränkender Ausführungsbeispiele näher erläutert, welche in den Zeichnungen dargestellt sind. In diesen zeigen schematisch:
- Fig. 1: eine perspektivische Ansicht einer erfindungsgemäßen Hackmaschine;
- Fig. 2: eine weitere perspektivische Ansicht der Hackmaschine aus Fig. 1;
- Fig. 3: eine Frontansicht der Hackmaschine aus Fig.1;
- Fig. 4: eine Seitenansicht der Hackmaschine aus Fig. 1;
- Fig. 5: eine Draufsicht auf die Hackmaschine aus Fig. 1;
- Fig. 6: ein Detail der erfindungsgemäßen Hackmaschine aus Fig. 1;
- Fig. 7: eine erfindungsgemäße Fördereinrichtung;
- Fig. 8: den Bereich VIII aus Fig. 7 im näheren Detail;
- Fig. 9: einen horizontalen Schnitt durch einen der Bereiche IX in Fig. 8;

- Fig. 10: Aufriss; eine perspektivische Ansicht der Fördereinrichtung aus Fig. 7 in einem teilweisen
- Fig. 11: Ein Detail der Fördereinrichtung aus Fig. 10;
- Fig. 12: eine Seitenansicht der Fördereinrichtung aus Fig. 7 und
- Fig. 13: eine Seitenansicht der Hackmaschine aus Fig. 1 mit ausgefahrener Fördereinrichtung

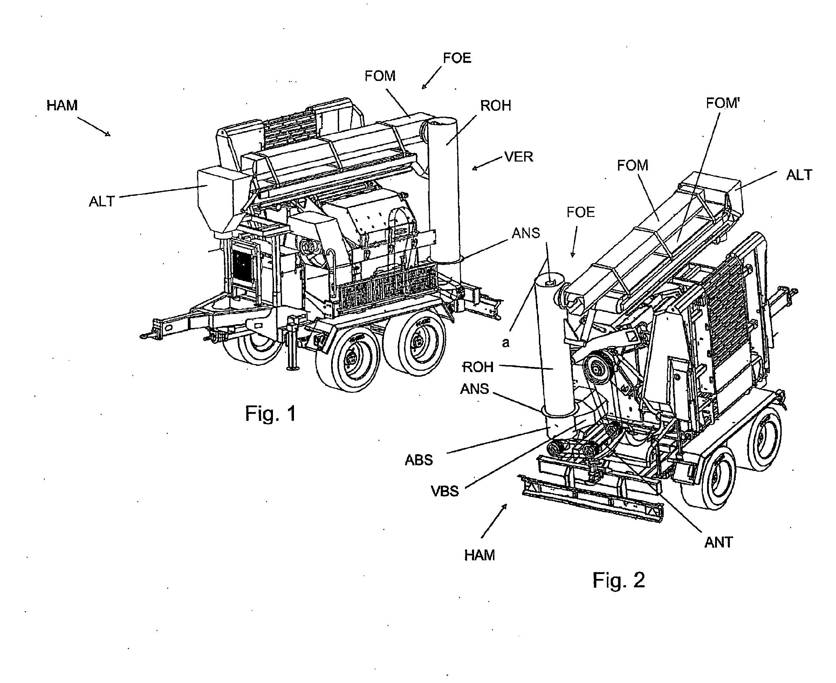

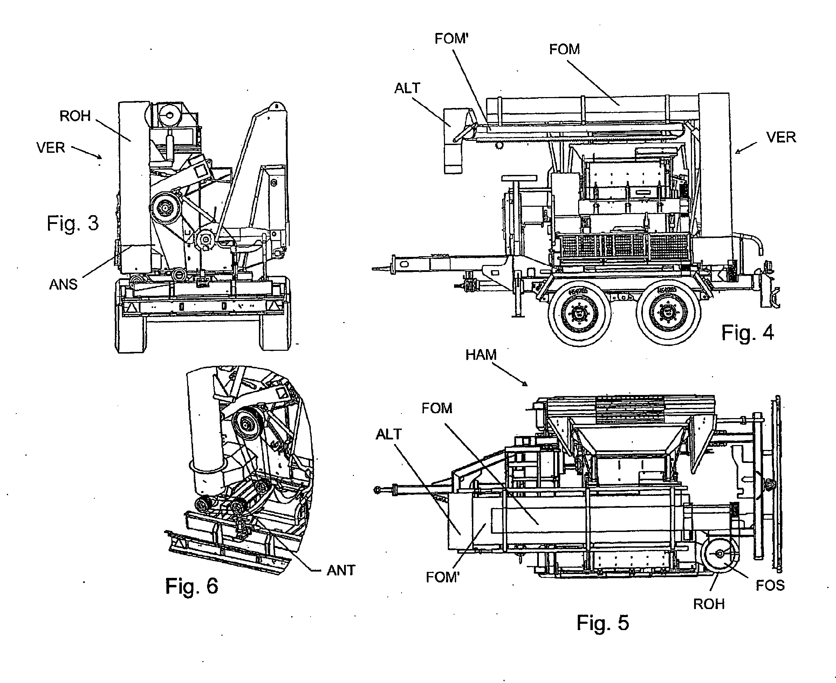

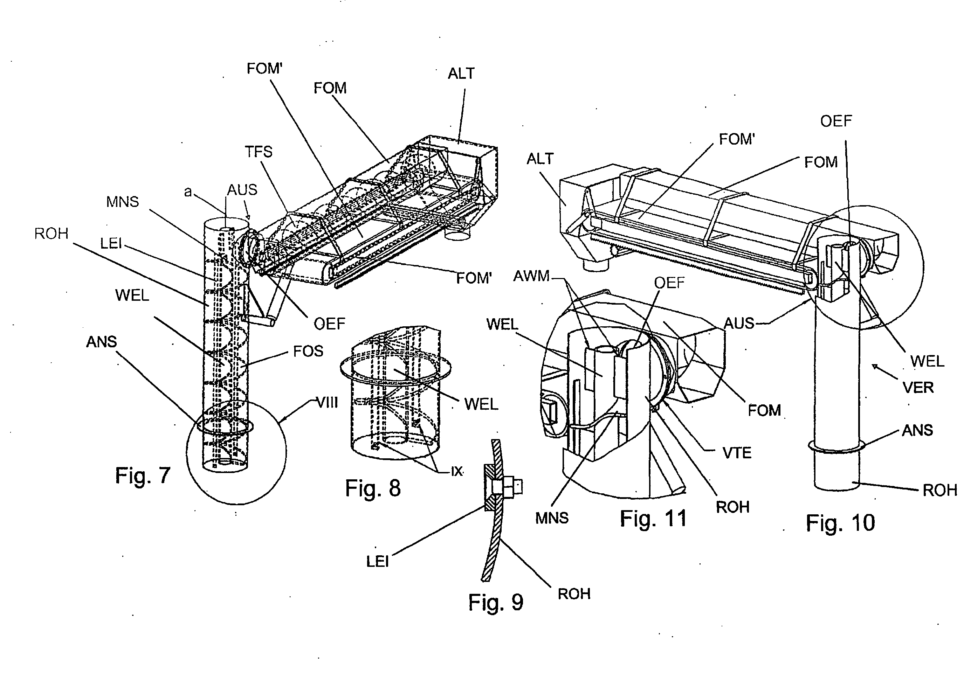

Gemäß den Figuren 1 - 6 weist eine erfindungsgemäße Hackmaschine HAM eine in einem Hackraum angeordnete, hier nicht näher dargestellte Hackvorrichtung auf. Mittels der Hackvorrichtung werden größere Holzstücke zu Hackgut bzw. Hackschnitzel zerkleinert. Derartige Hackvorrichtungen sind unter anderem aus der eingangs erwähnten DE 41 26 910 C1 bzw. der EP 77 30 68 A2 bekannt geworden und dem Fachmann hinlänglich bekannt. Weiters weist die dargestellte Hackmaschine HAM eine erfindungsgemäße Fördereinrichtung FOE mit einem Vertikalschneckenförderer VER zum Abtransport der Hackschnitzel auf. Über ein Verbindungsstück VBS können Hackschnitzel dem Vertikalschneckenförderer VER zugeführt und von diesem weitertransportiert werden, wobei die Förderrichtung des Vertikalschneckenförderers VER aufsteigend ist. Der Transport der Hackschnitzel erfolgt somit von dem Verbindungsstück VBS in Richtung einer in den Figuren 7, 10 und 11 mit OEF bezeichneten Auswurföffnung des Vertikalschneckenförderers VER. Weiters kann das Verbindungsstück VBS zur Aufnahme eines unteren Abschnittes des Vertikalschneckenförderers VER einen Aufnahmeabschnitt ABS aufweisen.

Der Vertikalschneckenförderer VER weist eine Förderschnecke FOS auf, die von einem zylindermantelförmigen Rohr ROH umgeben ist. In einem Auswurfbereich AUS für nach oben transportiertes Hackgut weist das Rohr ROH die bereits oben erwähnte, seitliche Öffnung OEF zum Auswerfen des Hackgutes auf. Die Öffnung OEF ist über einen Verbindungsteil VTE mit einem Fördermittel FOM verbunden. Das in dem Vertikalschneckenförderer VER nach oben transportierte Hackgut wird durch die Öffnung OEF über den Verbindungsteil VTE dem Fördermittel FOM zugeführt und von diesem und in Richtung eines Auslasstrichters ALT weiterbefördert.

Das Rohr ROH ist gemäß einer bevorzugten Variante der Erfindung rund oder mehrfach abgekantet, sodass sich in letzterem Fall ein polygonaler Querschnitt ergibt. Aufgrund der soeben erwähnten Ausführungsform des Rohres ROH lässt sich auf einfache Weise gewährleisten, dass der Vertikalschneckenförderer VER um seine Längsmittelachse a drehbar in dem Verbindungsstück VBS gelagert werden kann, wodurch sich eine sehr einfache Justierbarkeit der erfindungsgemäßen Fördereinrichtung FOE ergibt. Zur Abstützung auf dem Verbindungsstück VBS und um einen Anschlag zu bilden, kann das Rohr ROH einen Anschlag ANS, beispielsweise in Form eines einen umlaufenden Flansches, aufweisen.

Die Förderschnecke FOS des Vertikalschneckenförderers VER wird mittels eines Antriebes ANT angetrieben und weist eine in den Figuren 7, 8, 10 und 11 mit WEL bezeichnete Welle auf, auf welche der Antrieb ANT wirkt. Auf der Welle WEL ist eine schneckenartig gewundene Mitnehmerscheibe MNS der Förderschnecke FOS befestigt.

Auf Höhe der seitlichen Öffnung OEF weist die Förderschnecke FOS ein oder mehrere plattenförmige Auswurfmittel AWM auf, wobei die Längskante des Auswurfmittels AWM im Wesentlichen parallel zur Längsachse a des Vertikalschneckenförderers VER angeordnet ist. In der in Fig. 10 und Fig.11 dargestellten Ausführungsform sind als Auswurfmittel AWM Flachstahlbleche vorgesehen, welche auf der Welle WEL angeordnet sind und sich mit dieser mitdrehen.

Weiters können an der Innenseite des Rohres ROH eine oder mehrere parallel zur Rohrlängsachse a verlaufende, sich im Wesentlichen über die gesamte Förderhöhe des Vertikalschneckenförderers VER erstreckende in das Rohrinnere ragende Leisten LEI angebracht sein. Gemäß Fig. 9 können die Leisten LEI mit dem Rohr ROH verschraubt sein, wobei jedoch auch andere Verbindungsmethoden - wie beispielsweise Schweißen - möglich sind.

Das oben erwähnte Fördermittel FOM ist an dem Vertikalschneckenförderer VER in einem vorgebbaren Winkelbereich verschwenkbar gelagert. Bevorzugt kann das Fördermittel FOM Innerhalb eines Winkelbereichs von ca. 45 ° aus der Horizontalen nach oben verschwenkt werden. D. h., in einer unteren Position verläuft die Förderrichtung des Fördemittels FOM senkrecht zur Förderrichtung des Vertikalschneckenförderers VER, während in einer nach maximal oben geschwenkten Position die Förderrichtungen um 45 ° voneinander abweichen. Die hier angegebenen Winkelmaße beziehen sich nur auf eine günstige Ausführungsform der Erfindung. Je nach Ausführungsform und gestellten Anforderungen kann auch ein anderer einstellbarer Winkelbereich zwischen dem Vertikalschneckenförderer VER und dem Fördermittel FOM vorgesehen sein. Günstigerweise ist das Fördermittel FOM in seinem Verschwenkbereich frei feststellbar. Die Höhenverstellung und Fixierung des Fördermittels FOM kann beispielsweise mittels Hydraulik- oder Pneumatikzylindern ZYL erfolgen.

Gemäß Fig. 7, 8 und 10 bis 12 ist als weiteres Fördermittel FOM ein Trogschneckenförderer mit einer in einem Betriebszustand angetriebenen Trogförderschnecke TFS vorgesehen, welche beispielsweise gleichartig wie die Förderschnecke FOS ausgebildet sein kann. Die Förderrichtung des Trogschneckenförderers verläuft in Richtung eines Auslasstrichters ALT. Anstelle des soeben erwähnten Trogschneckenförderers kann aber auch ein hier nicht dargestelltes Förderband als Fördermittel FOM vorgesehen sein.

Unter dem Fördermittel FOM kann ein weiteres Fördermittel FOM' längsverschiebbar gelagert sein. In der hier gezeigten Ausführungsform der Erfindung ist das weitere Fördermittel FOM' als ausschiebbares Förderband ausgebildet. Zur Betätigung des Förderbandes kann beispielsweise ein mittels eines hydraulisch oder pneumatisch betätigbaren Zahnrades ZAH verstellbares Zahnstangensystem ZST vorgesehen sein.

Die Fördermittel FOM, FOM' (Förderschnecken bzw. -bänder) können mechanisch bzw. hydraulisch, beispielsweise mit Hydraulik- oder Pneumatikzylindern, angetrieben werden.

Mittels der dargestellten Anordnung eines ausschiebbaren Förderbandes unter dem Trogförderer wird eine große Flexibilität in der Wahl der Abwurfstelle des Hackgutes erzielt. Die Ausbringung des Hackgutes lässt sich noch dadurch verbessern, dass der an einem Endbereich des weiteren Fördermittels FOM' vorgesehene Auslasstrichter ALT für das Hackgut um eine im wesentlichen normal zur Längsachse a des Vertikalschneckenförderers VER verlaufende Achse c schwenkbar ist.

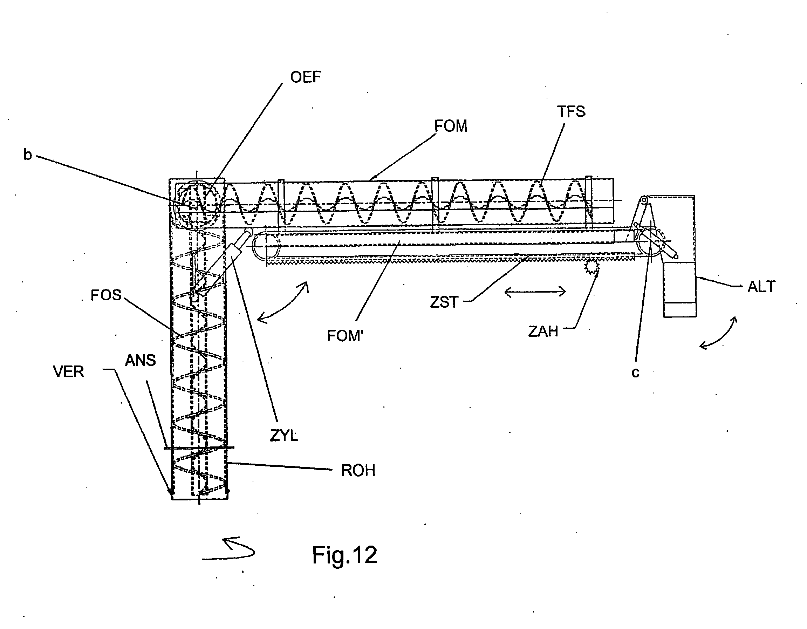

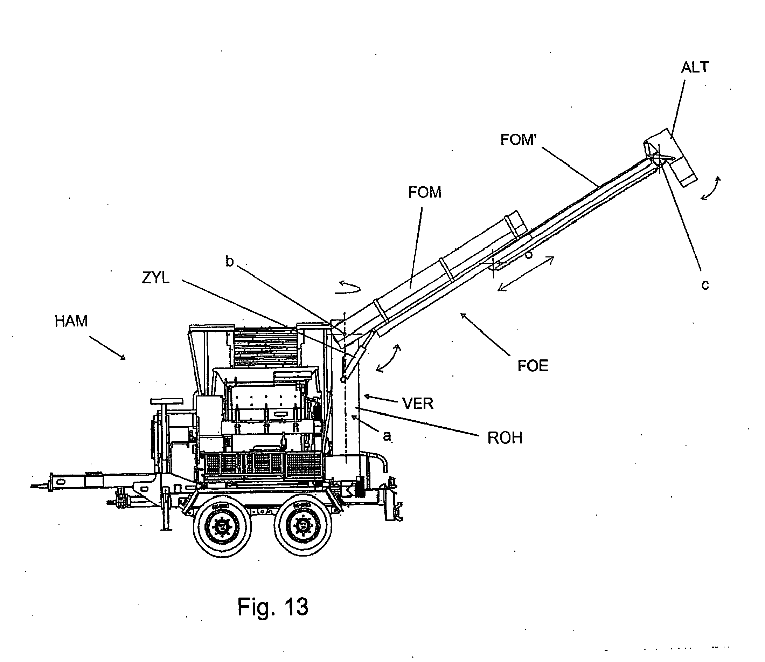

Die gemäß der bevorzugten Variante der Erfindung vorgesehenen, möglichen Bewegungsrichtungen der Hauptelemente der Fördereinrichtung FOE in einem montierten Zustand sind in den Fig. 12 und 13 veranschaulicht und mittels Pfeilen angedeutet. Die möglichen Bewegungsrichtungen sind im Folgenden kurz zusammengefasst. Der Vertikalschneckenförderer VER kann um seine Längsachse a und das Fördermittel FOM um eine zur Achse a normale Achse b verschwenkt werden. Das weitere Fördermittel FOM' kann in Längsrichtung des Fördermittels FOM eine Translationsbewegung ausführen. Der Auslasstrichter ALT ist ebenfalls um eine zur Achse a im Wesentlichen normal verlaufende Achse c verschwenkbar gelagert. Prinzipiell wären auch andere Bewegungsrichtungen möglich, so könnte beispielsweise der Vertikalschneckenförderer VER nicht drehbar angeordnet sein, wobei das Fördermittel FOM in diesem Fall sowohl in horizontaler als auch in vertikaler Richtung verschwenkbar sein könnte. Auch könnte der Auslasstrichter ALT um eine parallel zur Achse a des Vertikalschneckenförderers gelegene Achse drehbar gelagert sein.

## Patentansprüche

1. Fördereinrichtung (FOE) zum Abtransport erzeugten Hackgutes aus einer Hackmaschine (HAM) **dadurch gekennzeichnet, dass** zum Abtransport des Hackgutes ein Vertikalschneckenförderer (VER) vorgesehen ist, welcher eine von einem Antrieb (ANT) antreibbare Förderschnecke (FOS) aufweist, wobei die Förderschnecke (FOS) von einem in einem Auswurfbereich (AUS) für das Hackgut eine seitliche Öffnung (OEF) aufweisenden Rohr (ROH) umgeben ist, wobei der Vertikalschneckenförderer (VER) auf Höhe der seitlichen Öffnung (OEF) zumindest ein Auswurfmittel (AWM) für das Hackgut aufweist, und zumindest ein an dem Vertikalschneckenförderer (VER) in einem vorgebbaren Winkelbereich verschwenkbar gelagertes Fördermittel (FOM) zu einem Weitertransport von aus der Öffnung (OEF) ausgeworfenem Hackgut vorgesehen ist.

2. Fördereinrichtung (FOE) nach Anspruch 1, **dadurch gekennzeichnet, dass** an der Innenseite des Rohres (ROH) zumindest eine parallel zur Rohrlängsachse (a) verlaufende, sich im wesentlichen über die gesamte Förderhöhe des Vertikalschneckenförderers (VER) erstreckende, in das Rohrinnere ragende Leiste (LEI) angebracht ist.

3. Fördereinrichtung (FOE) nach Anspruch 1 oder 2, **dadurch gekennzeichnet, dass** das zumindest eine an dem Vertikalschneckenförderer (VER) verschwenkbar gelagerte Fördermittel (FOM) in seinem Verschwenkbereich frei feststellbar ist.

4. Fördereinrichtung (FOE) nach einem der Ansprüche 1 bis 3, **dadurch gekennzeichnet, dass** das zumindest eine an dem Vertikalschneckenförderer (VER) verschwenkbar gelagerte Fördermittel (FOM) als Trogförderer mit einer Trogförderschnecke (TFS) ausgebildet ist.

5. Fördereinrichtung (FOE) nach einem der Ansprüche 1 bis 3, **dadurch gekennzeichnet, dass** das zumindest eine an dem Vertikalschneckenförderer (VER) verschwenkbar gelagerte Fördermittel (FOM) als Förderband ausgeführt ist.

6. Fördereinrichtung (FOE) nach einem der Ansprüche 1 bis 5, **dadurch gekennzeichnet, dass** unter dem Fördermittel (FOM), welches an dem Vertikalschneckenförderer (VER) verschwenkbar gelagert ist, ein weiteres Fördermittel (FOM') längsverschiebbar gelagert ist.

7. Fördereinrichtung (FOE) nach Anspruch 6 **dadurch gekennzeichnet, dass** das weitere Fördermittel (FOM') als Förderband ausgebildet ist.

8. Fördereinrichtung (FOE) nach einem der Ansprüche 1 bis 7, **dadurch gekennzeichnet, dass** an einem Endbereich des weiteren Fördermittels ein um eine im wesentlichen normal zu einer Längsachse (a) des Vertikalschneckenförderers (VER) verlaufende Achse (c) schwenkbar gelagerter Auslasstrichter (ALT) für das Hackgut vorgesehen ist.

9. Fördereinrichtung (FOE) nach einem der Ansprüche 1 bis 8, **dadurch gekennzeichnet, dass** das zumindest eine Auswurfmittel (AWM) plattenförmig ausgebildet ist, wobei die Längskante des Auswurfmittels (AWM) im Wesentlichen parallel zur Längsachse (a) des Vertikalschneckenförderers (VER) angeordnet ist.

10. Hackmaschine (HAM) mit einer Fördereinrichtung (FOE) nach einem der Ansprüche 1 bis 9.

11. Hackmaschine (HAM) nach Anspruch 10, **dadurch gekennzeichnet, dass** der Vertikalschneckenförderer (VER) um seine Längsachse (a) drehbar an der Hackmaschine (HAM) angeordnet ist.
